Europäisches Patentamt

European Patent Office

Office européen des brevets

(19)

(11) **EP 1 229 486 A1**

(12) **EUROPEAN PATENT APPLICATION**

(43) Date of publication:
07.08.2002 Bulletin 2002/32

(51) Int Cl.⁷: **G06K 9/46**, G06K 9/00

(21) Application number: 01102118.5

(22) Date of filing: 31.01.2001

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **GRETAG IMAGING Trading AG**
**5430 Wettingen (CH)**

(72) Inventor: **Held, Andreas**
**8052 Zürich (CH)**

(74) Representative: **Schwabe - Sandmair - Marx**
**Stuntzstrasse 16**
**81677 München (DE)**

(54) **Automatic image pattern detection**

(57)     The invention relates to a method for automatically detecting a pre-defined image pattern in an original picture, wherein pixel data from said original picture are looked through by means of a processing step, including at least one transform, to find said pre-defined image pattern, wherein according to the invention said processing is split up into at least two stages, wherein a first stage with a coarse processing is to detect locations in the original picture imposing an increased likelihood that the pre-defined image pattern, can be found there, and wherein a second stage with a refined processing is applied to the locations to identify the pre-defined image pattern.

Fig. 1

EP 1 229 486 A1

Printed by Jouve, 75001 PARIS (FR)

**Description**

The present invention relates to a method for automatically detecting a pre-defined image pattern, in particular a human eye, in an original picture according to claim 1. In addition, the present invention is directed to an image processing device, a computer data signal as well as a data carrier device, all of them being established to accomplish the method according to the invention.

In the field of the automatic detection of particular image patterns, it has always been a challenging task to identify a searched image pattern in a picture. Such automatic detection is recommendable if image data have to be modified or altered, for instance to correct defective recording processes. For instance, if flash light photographs have been made, it is very likely that such flash light photographs show persons and that red-eye defects might occur.

Furthermore, it is possible that flash light photographs, taken through a glass plate, show a reflection of the flash light.

There are further situations which could cause defects in a photograph, which can be corrected. However, in the following, the description will be concentrated on the automatic detection of eyes in facial images, since the correction of red-eye defects is a very relevant task, and this kind of correction needs the location of the actual position and the size of the eyes before the correction is possible.

Several attempts have been proposed to detect the location of particular image patterns and in particular of human eyes. Very often, the Hough transform has been applied for the detection of the eye center. Since the Hough transform needs a large memory space and a huge processing speed of a computer-based system, the Hough transform is mainly used in a modified manner as for example disclosed in "Robust Eye Center Extraction Using the Hough Transform", by David E. Benn et al, proceeding of the first International Conference AVBPA; pp. 3-9; Crans-Montana, 1997.

In addition, it has been proposed to use flow field characteristics being generated by the transitions from the dark iris of a human eye to the rather light sclera. This kind of procedure provides for a data field, which is comparable with an optical flow field generated for motion analysis. Afterwards, two-dimensional accumulators are used to obtain votes for intersections of prominent local gradients. Such a method is disclosed in "Detection of Eye Locations in Unconstrained Visual Images", Proc. Int. Conf. on Image Processing, ICIP 96; pp. 519-522; Lausanne; 1996 by Ravi Kothari et al.

Another kind of procedure is based on a deformable template, which is a role model of a human eye. By minimising the cost of the fit of the template over a number of energy fields, they iteratively find the best fit. This method is apt to being trapped in local minima and it is rather difficult to find a general parameter set that works for a wide variety of images.

Generally speaking, all known methods to find a particular image pattern are time consuming, uncertain and the results of these known methods are not applicable as far as professional photofinishing is concerned where large-scale processing of a hude number of photographs in a very short time and at low cost is demanded.

Accordingly, it is an object of the present invention to provide a method to locate the position of a searched image pattern. In particular, it is an object of the present invention to provide a method to locate the position of a human eye. Furthermore, it is an object of the present invention to propose a method for locating a particular image pattern and, in particular, a human eye with an increased likelihood in a very short time and with a sufficient accuracy.

In addition, it is an object of the present invention to propose an image processing device, a computer data signal embodied in a carrier wave as well as a data carrier device, all of them which are implementing a method proposed to solve the afore-mentioned objects.

The above objects are at least partially solved by the subject-matter of the independent claim 1. Useful embodiments of the invention are defined by the features listed in the subclaims.

The advantages of the present invention according to the method as defined in claim 1, are based on the following steps: pixel data from an original picture are looked through by means of data processing, including at least one transform, to find a set pre-definable image pattern, in particular a human eye, wherein said processing is split up into at least two stages, wherein, in a first stage, coarse processing is conducted to detect one or several locations in the original picture imposing at least a likelihood that the pre-defined image pattern, in particular a human eye, can be found there; and, in a second stage, a refined processing is applied to the locations to at least identify the center, or approximate center, of the pre-defined image pattern, in particular a human eye.

Both the first stage and the second stage can be implemented very advantageous by a Hough transform, and in particular a gradient decomposed Hough transform, is used. The advantages of the Hough transform is that it is possible to transform, for instance, two dimensional elements like a line, a circle, a curve, ..., into just one point in a plane which is provided by the Hough transform.

Advantageously, the first stage also includes pre-processing to modify the original picture in accordance with generally existing features of the image pattern searched for, in particular a human eye. For instance, if red-eye defects being looked for, it is possible to use a red-enhanced colour space to emphasise the red colour of the eye which has to be detected.

Furthermore, it is possible to conduct another kind of pre-processing, according to which areas of an original picture are omitted, for which the likelihood is low that the pre-defined image pattern, in particular a human eye, can be found there. For instance, it is unlikely that an image pattern like a human eye can be found in the lower 1/3 of a picture. Furthermore, it is unlikely that human eyes for a red-eye defect can be found near the borders of a picture or close to the upper end of a picture. Thus, such assumptions can be used to decrease the amount of image data to be processed. In addition, also other kinds of pre-processing can be used, for instance, it is possible to normalise the input image to a known size given by a pictogram of a face image and/or it is possible to perform any kind of histogram normalisation or local contrast enhancement. For instance, it is possible to introduce a kind of rotation invariant pre-processing, i.e. the pictogram of a face which is stored to be compared with image data of an original image for a face detection, can be rotated to try to merge the face pictogram to a face recorded on a picture, which might be disoriented with respect to the image plane.

However, it has to be kept in mind that pre-processing can be performed by any kind of combination of known pre-processing methods.

An essential aspect of the first stage is that the image data, and in particular the pre-processed image data of the original picture, are directed to a gradient calculation processing. On the basis of this gradient calculation processing, it is possible to obtain gradient information. According to an advantageous embodiment of the invention, this gradient information can be processed in the first stage to remove straight lines from the image data. First, an edge detector has to process the image data to provide the necessary gradient information. Of course, also other mathematical methods can be used, like Sobel operators, the well known Canny edge detector, or the like. The resulting image edge data is addressed to a threshold processing, to remove edge data beyond a particular threshold. The remaining image edge data are processed to detect their aspect ratio, i.e. it is examined whether the image edge data comply with minimum or maximum dimensions. If an aspect ratio of corresponding image edge data is above (or below) a particular threshold, these image data are deemed to represent (not to represent) a straight line. In accordance with the chosen selection conditions, the corresponding image edge data are deleted. In other words, if the aspect ratio of a straight line has to be beyond a particular threshold, straight lines beyond this particular threshold are deleted.

The image edge data identified to represent straight lines can be directed to a deleting processing. For instance, they can be deleted with a matrix-like structuring element, e.g. of the size 3 x 3, to slightly increase the area of influence of the straight lines in the image. Afterwards, these areas are removed from the original gradient images, for instance by using an XOR operation.

This kind of dilatation is an operation from mathematical morphology that transforms an image based on set theoretic principles. The dilatation of a object by an arbitrary structuring element is defined as the union of all translations of the structuring element so that its active point which is taken to be the center here, is always contained in the object. For instance, dilating a straight line of thickness by a 3x3 structuring element replaces the line by another straight line of thickness 3. In the next step all the gradient information is deleted that is covered by the dilated straight lines. To this aim, an XOR operation between the gradient image and the dilated straight line is performed. In other words, in the gradient image only that information is left unchanged which is coinciding with any of the straight line information. All other pixels are set to zero.

Resulting gradient image data can be directed to a gradient decomposed Hough transform, which is modified to fit curves and/or circles, which is particularly useful to identify the location of human eyes, a rising sun, the reflection of a flash light or the like.

A Hough accumulator space can advantageously be calculated at a point (xy) by the following equations:

$$x_0 = x \pm \frac{r}{\sqrt{1 + dx^2/dy^2}} \qquad (1.1)$$

$$y_0 = y \pm \frac{r}{\sqrt{1 + dy^2/dx^2}} \qquad (1.2)$$

In these equations, dx and dy are the vertical and horizontal components of the gradient intensity at the point (x,y). On the basis of these equations, it is possible to obtain the center of a circle, like a human eye or a rising sun or the like, by finding a peak in the two dimensional accumulator space. These equations are particularly useful for all concentric circles. All these kinds of circles will increment the accumulator at the same location. In particular for detecting human eyes, where a lot of circular arcs from the iris, the pupil, the eye-brows, etc., can be identified, these circular arcs will add up in the same accumulator location and will allow for a very stable identification of the eye center.

Accordingly, it is a very advantageous variant of the method according to the invention to add up the results of the processing of the resulting Hough transform processed image data in a two dimensional accumulator space to provide at least one characteristic first stage maximum for the searched image pattern, e.g. a human eye, to detect a center or a approximate center of the searched image pattern in correspondence with the location of the searched image pattern in the corresponding original picture. According to another advantageous variation of the method according to the invention, only first stage maxima above a certain threshold are considered as the center, or approximate center, of a searched image pattern, in particular a human eye. This threshold processing can be implemented by the following equation:

$$A' = max(0,A-max(A)/3) \tag{1.3}$$

This is to avoid that a local maximum which is much smaller than a maximum of a searched image pattern, e.g. a human eye, irritates and is erroneously deemed to be the center or approximate center of the searched image pattern.

According to a very advantageous variation of a method of the invention, a surrounding of the detecting center or center together with the gradient image is directed to the second stage by refined processing, to project the image data into two one-dimensional accumulators to find second stage maxima.

To find second stage maxima corresponding to the searched image patterns, e.g. a human eye, only second stage maxima above a certain threshold are considered as the center, or approximate center, of the searched image pattern. Again, it is preferred to implement this step of the advantageous method of the invention by means of the equation (1.3).

It is particularly useful to use a mathematical distribution, in particular a Gaussian distribution, to process the gradient data projected into the two one-dimensional accumulators in each of the surroundings, to determine a mean and a standard deviation. Since in this stage of the method of the invention, there is only one possible image pattern candidate in each surrounding, for instance a possible eye candidate, it is much easier and efficient to identify the searched image pattern in this stage of the method according to the invention on the basis of the first stage, i.e. the coarse detection stage or the like.

One advantageous variation of the invention is to introduce the minima of the two standard variations as an estimation of the size of the searched image pattern, e.g. a human eye or the like.

According to the invention, an image processing device for processing image data, which can implement the method according to the invention, includes an image data input section, an image data processing section and an image data recording section for recording processed image data. Usually, such kind of image processing devices are image printers including a scanning section for scanning image data recorded on a exposed film. The scanned image data are then stored in a memory and transmitted to a data processing section. In this data processing section, it is possible to implement a method according to the invention and to find out whether particular images include areas with a high probability that searched image patterns are present therein. If such image areas cannot be found, the corresponding images are not further processed, but transferred to an image data recording section, for instance a CRT-printing device, a DMD-printing device or the like. On the other hand, if an area in an original picture can be found, the image data of this original picture are processed in the image data processing section in accordance with the method according to the present invention.

The method of the present invention can also be embodied in a carrier wave to be transmitted through the Internet or similar and, accordingly, it is also possible to distribute the method of the present invention on a data carrier device.

In the following, particular embodiments of the present invention are described with reference to the attached drawings. Accordingly, new features of the present invention are disclosed. Features of different embodiments may be combined.

Fig. 1    is a flow diagram showing the principles of the method according to the present invention.
Fig. 2    shows Sobel operators to be used in an embodiment of the invention.
Fig. 3    is a flow diagram depicting a first stage of the method in accordance with one embodiment of the invention.
Fig. 4    shows a pictogram of a face.

Fig. 5     shows a pictogram of a human eye.
Fig. 6     shows one embodiment of a second stage of an embodiment of the method of the present invention.
Fig. 7     shows the distribution as a result of one embodiment of the first stage of the invention.
Fig. 8     shows the distribution according to Fig. 7 after further processing.

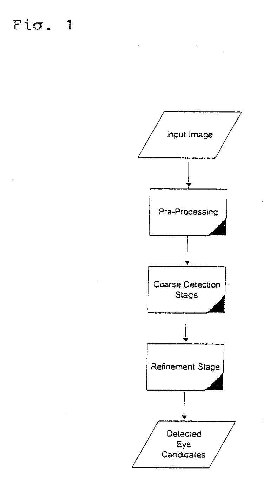

Fig. 1 shows a flow diagram for the automatic detection of image patterns and particularly for human eyes, the sun, a flashlight reflection or the like. The detection is carried out in two stages: a coarse stage followed by a refinement stage. During the coarse stage, the exact locations of the searched image pattern are of less interest. However, attention is rather directed to areas that are of interest and that are likely to contain the searched image patterns, e.g. eyes. During the refinement stage those regions will then be further examined and it will then be determined whether there actually is a searched image pattern, e.g. an eye and, if yes, what is its location and approximate size.

In the following, the disclosure is directed to the recognition of the location of eyes, while it is, of course, possible to proceed with other image patterns approximately the same way.

For both the coarse and the refinement detection stage, the gradient decomposed Hough transform is relied on for the detection of eyes.

The classical theory of the Hough transform will be referred to below. This transform is the classical method for finding lines in raster images. Consider the equation of a line in Equation (2.1).

$$y = mx + c \tag{2.1}$$

If, for each set pixel in the image, x and y are kept fixed and a line is drawn in the accumulator space according to Equation (2.2), then for each line that is formed in the original image, all the lines drawn in the accumulator will intersect in one place, namely the place that determines the proper parameters for that line in question.

$$c = xm + y \tag{2.2}$$

The original theory of the Hough transform can be extended to accommodate other curves as well. For instance, for circles, it is possible to use the parameter model for a circle as given in Equation (2.3). Now, however, this will require a three-dimensional parameter space.

$$r^2 = (x-a)^2 + (y-b)^2 \tag{2.3}$$

An extension to this approach is to use gradient information rather than the actual raster image. Differentiating Equation (2.3) with respect to x yields Equation (2.4),

$$\frac{dy}{dx} = \frac{x-a}{y-b} \tag{2.4}$$

Where dx and dy are the vertical and horizontal components of the gradient intensity at the point (x,y). By substitution, it is obtained

$$x_0 = x \pm \frac{r}{\sqrt{1 + \dfrac{dx^2}{dy^2}}} \tag{1.1}$$

$$y_0 = y \pm \frac{r}{\sqrt{1+ \dfrac{dy^2}{dx^2}}} \qquad\qquad (1.2)$$

Now, the center of the circle of interest can be obtained by finding a peak in the two-dimensional accumulator space. What is interesting in the representation derived here is that all circles that are concentric will increment the accumulator in the same location. In other words, for detecting eyes where there are a lot of circular arcs from the iris, the pupil, the eye-brows, etc, they will all add up in the same accumulator location and allow for a very stable location of the eye center. However, since the variable r was removed from the parameter space, it will not be possible to detect the radius of the eye in question.

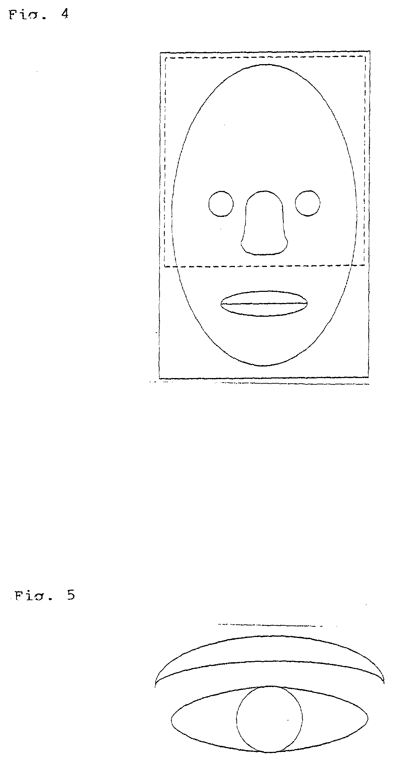

First, it is reasonable to start the approach for the detection of eyes with some kind of pre-processing. Here, for instance, it is useful to normalise the input image to a known size, given by a model face image, or any kind of histogram normalisation or local contrast enhancement can be performed. For this approach described here, it s preferred to restrict the domain of the input by only looking at a part of the image. Assuming that the input image is a proper fact image, preferably the output from some face detection scheme, it is decided to look only at the upper 2/3 of the image as shown in Fig. 4. This will allow to neglect parts of the mouth and even the nose, that contain a lot of curved features and could mislead further detection of the eyes.

Depending on the domain of the system, which is further processed, it is useful to apply some special colour space conversions in order to stress certain features. For instance, if eyes for later red-eye removal are to be detected, it is useful to employ a red-enhanced colour space as input to the gradient calculations, as is shown in Equation (3.1).

$$I_{red} = max(O, R-min(G,B)) \qquad\qquad (3.1)$$

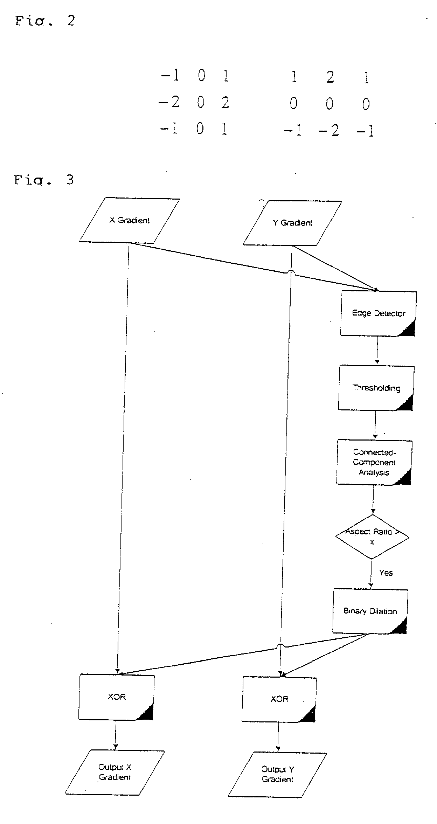

Given the pre-processed input image, it is possible to proceed to calculate the gradient information, which will then be needed for the actual Hough transform. The gradient images can either be calculated by applying Sobel templates or operators as shown in Fig. 2, or by utilising other gradient information, as for instance can be obtained from the Canny edge detector.

At this stage, it is decided to apply a straight-line removal procedure to the gradient images. This will allow the influence of very strong, but straight, gradients on the accumulator to be reduced considerably. The outline of straight-line removal is shown in Fig. 4. Straight-line removal attempts to isolate straight lines from the detected edges and removes those areas from the gradient image. In general, this will result in a much better detection of the eye center.

Straight-line removal as shown in Fig. 3, includes the following steps. First, the edges of the image are extracted by applying some edge detector, for instance, the Canny edge detector. Applying some threshold to the detected edges provides for a binary that contains only the most prominent edges. Now, a connected component analysis is applied to the binary image. For each connected component, its aspect ratio is calculated by extracting the major and the minor axis. If the aspect ratio is bigger than a previously set value, it is assumed that the component is, in fact, a straight line. If not, then the component is selected from the edge image. Repeating this for all connected components leaves only the straight lines in the image. By dilating them, e.g. with a 3 x 3 structuring element, for instance a matrix the area of influence is slightly increased and then those areas are removed from the original gradient images by applying, e.g. an XOR operation.

By referring to Fig. 5, it can be taken into account that all the gradient information from the iris, the pupil, and even the eye brow will point towards the very center of the eye.

This means, by first calculating the gradient information from an image and by adding up the accumulator for a certain range of this will provide a two dimensional accumulator space, which will show prominent peaks wherever there is an eye. It is interesting to note here that the correspondence between the accumulator and the original image is one-to-one. This means, where there is a peak in the accumulator there will be an eye center at exactly the same location in the original image.

Looking at a cross section of the accumulator in Fig. 7, it can be seen that there will be a lot of local maxima for rather low values. To avoid finding all of these local maxima the lower range of the accumulator can be completely neglected. This is done according to Equation (3.2) and results in the accumulator space as shown in the lower part of Fig. 8.

$$A' = max(0, A - max(A)/3) \qquad (3.2)$$

Finally, it is possible to apply a simple function for isolating local peaks to the accumulator. Care has to be taken though as some of the peaks might consist of plateaus, rather than of isolated pixels. In this case, the center of gravity of the plateau will be chosen. At this point a list of single pixels which all can represent eyes is achieved. As the size of the face image has been fixed in the very beginning, a simple estimate for the eye size is now employed to isolate eye surroundings or eye boxes centered at the detected pixel.

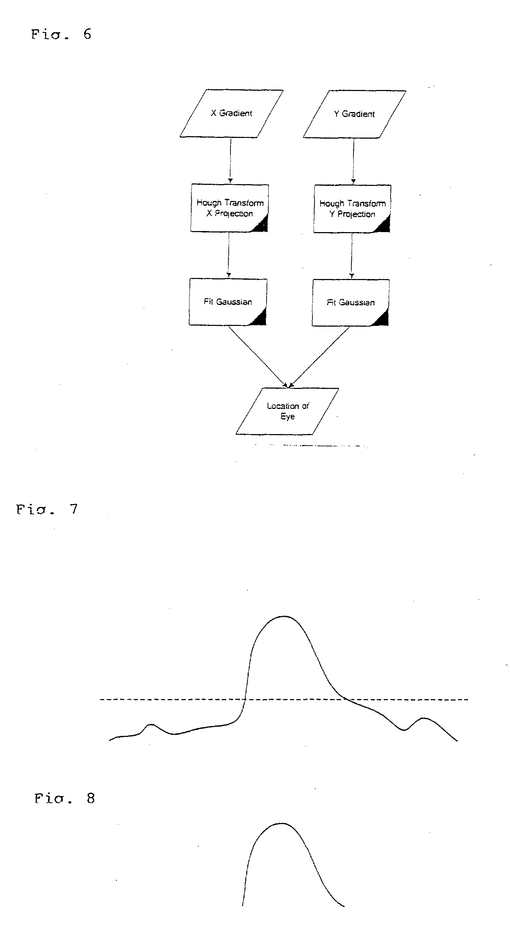

The input to the second stage, i.e. the refinement stage, are the isolated boxes or surroundings from the previous stage, each containing a possible eye candidate, together with the gradient images as described before. An outline of the refinement stage is given in Fig. 6.

Basically, the approach is the same as for the coarse detection stage. However, instead of having one two-dimensional accumulator, now two one-dimensional accumulators are used. This means, each accumulator will contain the projection of all the votes onto the axis in question. Differently to the coarse detection stage, where a projection would incur many spurious peaks due to spatial ambiguities, in the case of the eye boxes, it can safely be assumed that there is not more than one object of interest within the surrounding or box. Therefore, using projections will considerably simplify the task of actually fitting a model to the accumulator, as it has only to deal with one-dimensional functions. Again, the projections would look somewhat similar to the cross-section as shown in Figs. 7 and 8, and they can be treated accordingly, following Equation (3.2). For the remaining values in the accumulator, a Gaussian distribution can be used and its mean and standard deviation can be calculated. The two means, one from the x projection and one from the y projection, directly give the location of the eye center. The minimum of the two standard deviations will be taken as an estimate for the size of the eye.

For the projection onto the x-axis, the estimate of location and size will be rather accurate in general, due to the symmetry. For the projection onto the y-axis, however, there might be some kind of bias if there is a strong eyebrow present. In practice, however, the influence of this can be neglected, as it usually will be offset by other gradient edges below the eye.

For each detected eye candidate, it is possible to further extract some kind of confidence measure by looking at how many votes this position received in the two-dimensional accumulator space. A high number of votes strongly corroborates the actual presence of an eye.

According to the invention, an automatic approach to image pattern detection based on the hierarchical application of a gradient decomposed Hough transform has been presented. Due to the splitting up of the task into a coarse and a fine stage, it is possible to get a much more robust image pattern, and thus also a much more robust eye detector with a high detection rate and a low false positive rate.

## Claims

1. Method for automatically detecting a pre-defined image pattern, in particular a human eye, in an original picture, comprising the following steps:

   a) pixel data from said original picture are looked through by means of a processing step, including at least one transform, to find the pre-defined image pattern, in particular a human eye,
   **characterized in that**
   b) said processing step is split up into at least two stages, including:

   b1) a first stage with a coarse processing step to detect locations in the original picture imposing an increased likelihood that the pre-defined image pattern, in particular a human eye, can be found there;
   b2) a second stage with a refined processing to be applied to the locations to identify the pre-defined image pattern, in particular a human eye.

2. Method according to claim 1, wherein at least one of the stages uses a Hough transform, and in particular a gradient decomposed Hough transform.

3. Method according to one of claims 1 or 2, wherein the first stage additionally includes pre-processing step to modify the image in accordance with generally existing features of the image pattern searched for, in particular a human eye.

4. Method according to one of claims 1 to 3, wherein the first stage additionally includes another pre-processing step according to which areas of an original picture are omitted for which the likelihood is low that the pre-defined image pattern, in particular a human eye, can be found therein.

5. Method according to one of claims 1 to 4, wherein the first stage includes that the image data, and in particular the pre-processed image data of the original picture, is directed to a gradient calculation processing to achieve gradient information to be processed further.

6. Method according to one of claims 1 to 5, wherein the first stage includes that straight lines are removed from the image data by means of the following steps:

   a) an edge detector processing is applied to the image data;
   b) a threshold processing is applied to the image edge data to sort out edge data beyond/above a particular threshold;
   c) remaining image edge data are processed to detect there aspect ratio;
   d) if an aspect ratio of a corresponding image edge data is above/beyond a particular threshold, this image data are deemed to represent a straight line, and image data beyond/above the particular threshold are deleted.

7. Method according to claim 6, wherein the image edge data identified to represent straight lines are directed to a deleting processing step.

8. Method according to one of claims 5 to 7, wherein the resulting image data is directed to a gradient decomposed Hough transform and is modified, in particular to fit curves and/or circles, modification being done in accordance with basic shape features of the searched image pattern, in particular a human eye.

9. Method according to claim 8, wherein a gradient intensity is calculated at a point (x,y) by the following equations:

$$x_0 = x \pm \frac{r}{\sqrt{1 + \frac{dx^2}{dy^2}}} \qquad (1.1)$$

$$y_0 = y \pm \frac{r}{\sqrt{1 + \frac{dy^2}{dx^2}}} \qquad (1.2)$$

10. Method according to one of claims 8 or 9, wherein the results of the processing of the resulting image data are added up in a two-dimensional accumulator space to provide at least one characteristic first stage maximum for the searched image pattern to detect a center or approximate center of the searched image pattern, in particular a human eye, in correspondence with the location of the searched image pattern in the corresponding original picture.

11. Method according to claim 10, wherein only first stage maxima above a certain threshold are considered as a center, or approximate center, of a searched image pattern, in particular a human eye, preferably by the following equation:

$$A' = max(0, A-max(A)/3) \qquad (1.3)$$

12. Method according to one of claims 10 or 11, wherein a surrounding of the detected center, or centers, together with the gradient image, is directed to the second stage with a re-find processing to protect the image data into one-dimensional accumulators to find out a second stage maximum.

**13.** Method according to claim 12, wherein only second stage maxima above a certain threshold are considered as the center, or approximate center, of a searched image pattern, in particular a human eye, preferably by the following equation:

$$A' = \max(0, A - \max(A)/3) \tag{1.3}$$

**14.** Method according to one of claims 12 or 13, wherein a mathematical distribution, in particular a Gaussian distribution, is applied to the gradient image data in each of the surroundings to determine a mean and a standard deviation, wherein the mean deviations of each of the projections correspond to one-dimensional accumulators, i.e. either the x-axis or the y-axis, result in the location of the center of the searched image pattern, e.g. a human eye.

**15.** Method according to claim 14, wherein the minimum of the two standard deviations for the two corresponding one-dimensional accumulators provides an estimation of the size of the searched image pattern, e.g. a human eye.

**16.** Image processing device for processing image data, including:

a) an image data input section,
b) an image data processing section,
c) an image data recording section for recording image data,

wherein the image data processing section is embodied to implement a method according to one of claims 1 to 15.

**17.** Computer data signal embodied in a carrier wave, comprising instructions to implement the method according to one of claims 1 to 15.

**18.** Data carrier device carrying control data to control a computer-based device or image processing device to implement the method according to one of claims 1 to 15.

Fig. 1

Fig. 2

$$\begin{array}{ccc} -1 & 0 & 1 \\ -2 & 0 & 2 \\ -1 & 0 & 1 \end{array} \qquad \begin{array}{ccc} 1 & 2 & 1 \\ 0 & 0 & 0 \\ -1 & -2 & -1 \end{array}$$

Fig. 3

```
   ┌──────────┐              ┌──────────┐
   │ X Gradient│             │ Y Gradient│
   └──────────┘              └──────────┘
```

Fiɔ. 4

Fiɔ. 5

Fig. 6

Fig. 7

Fig. 8

**European Patent Office**

## EUROPEAN SEARCH REPORT

Application Number

EP 01 10 2118

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | ZHANG XIN ET AL: "Locating facial features with color information" ICSP '98. 1998 FOURTH INTERNATIONAL CONFERENCE ON SIGNAL PROCESSING (CAT. NO.98TH8344), PROCEEDINGS OF ICSP'98 FOURTH INTERNATIONAL CONFERENCE ON SIGNAL PROCESSING, BEIJING, CHINA, 12-16 OCT. 1998, pages 889-892 vol.2, XP002174958 1998, Piscataway, NJ, USA, IEEE, USA ISBN: 0-7803-4325-5 * abstract * * page 890, paragraph 3 - page 891, paragraph 5 * | 1-5 | G06K9/46 G06K9/00 |
| X | US 5 740 274 A (SHUJI ONO ET AL.) 14 April 1998 (1998-04-14) * abstract * | 1 | |
| X | EP 0 883 080 A (AT & T CORPORATION) 9 December 1998 (1998-12-09) * page 4, line 31 - page 5, line 35 * | 1 | TECHNICAL FIELDS SEARCHED (Int.Cl.7) |
| A | EP 0 751 473 A (LUCENT TECHNOLOGIES) 2 January 1997 (1997-01-02) * column 5, line 15 - line 40 * | 6 | G06T G06K |

The present search report has been drawn up for all claims

| Place of search | Date of completion of the search | Examiner |
|---|---|---|
| THE HAGUE | 15 August 2001 | Chateau, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

## ANNEX TO THE EUROPEAN SEARCH REPORT
## ON EUROPEAN PATENT APPLICATION NO.

EP 01 10 2118

This annex lists the patent family members relating to the patent documents cited in the above-mentioned European search report.
The members are as contained in the European Patent Office EDP file on
The European Patent Office is in no way liable for these particulars which are merely given for the purpose of information.

15-08-2001

| Patent document cited in search report | | Publication date | Patent family member(s) | | Publication date |
|---|---|---|---|---|---|
| US 5740274 | A | 14-04-1998 | US | 5856660 A | 05-01-1999 |
| | | | US | 6208758 B | 27-03-2001 |
| | | | EP | 0532052 A | 17-03-1993 |
| | | | EP | 0532053 A | 17-03-1993 |
| | | | JP | 5282457 A | 29-10-1993 |
| | | | JP | 3008233 B | 14-02-2000 |
| | | | JP | 5210739 A | 20-08-1993 |
| | | | JP | 3008234 B | 14-02-2000 |
| | | | JP | 5307605 A | 19-11-1993 |
| | | | JP | 3008235 B | 14-02-2000 |
| | | | JP | 5274438 A | 22-10-1993 |
| | | | JP | 3008236 B | 14-02-2000 |
| | | | JP | 5274439 A | 22-10-1993 |
| | | | JP | 5307537 A | 19-11-1993 |
| | | | US | 5878165 A | 02-03-1999 |
| | | | US | 5604820 A | 18-02-1997 |
| | | | US | 5604823 A | 18-02-1997 |
| | | | US | 5751831 A | 12-05-1998 |
| | | | US | 5619593 A | 08-04-1997 |
| | | | JP | 5282275 A | 29-10-1993 |
| EP 0883080 | A | 09-12-1998 | CA | 2236082 A | 03-12-1998 |
| EP 751473 | A | 02-01-1997 | US | 5805745 A | 08-09-1998 |
| | | | CA | 2177639 A | 27-12-1996 |
| | | | DE | 69612700 D | 13-06-2001 |
| | | | JP | 9102043 A | 15-04-1997 |

EPO FORM P0459

For more details about this annex : see Official Journal of the European Patent Office, No. 12/82